# EUROPEAN PATENT SPECIFICATION

(11) **EP 2 699 979 B1**
(45) Date of publication and mention of the grant of the patent: **23.02.2022**
(21) Application number: 12731199.1
(22) Date of filing: 18.04.2012
(51) Int. Cl.: G06F 1/26

(54) **INFORMATION TECHNOLOGY (IT) POWER SUPPLY, POWER DISTRIBUTION, OR ENVIRONMENTAL CONTROL APPARATUS AND METHOD**
INFORMATIONSTECHNOLOGIE (IT)-STROMVERSORGUNGS-, STROMVERTEILUNGS- ODER UMGEBUNGSKONTROLLVORRICHTUNG UND VERFAHREN DAFÜR
APPAREIL ET PROCÉDÉ D'ALIMENTATION ÉLECTRIQUE, DE DISTRIBUTION D'ÉNERGIE OU DE PROTECTION DE L'ENVIRONNEMENT EN TECHNOLOGIE DE L'INFORMATION (IT)

(30) Priority: 18.04.2011 US 201161476552 P
(43) Date of publication of application: 26.02.2014
(73) Proprietor: Eaton Intelligent Power Limited, Dublin 4 (IE)
(72) Inventor: MENON, Ramesh, J., Cary NC 27518 (US); OVERBERG, Thomas, J., Apex NC 27523 (US); NANDAM, Pradeep, K., Cary NC 27519 (US); EFFRON, Matthew, S., Raleigh NC 27613 (US); CLARK, Ronald, L., Knightdale NC 27545 (US); BARR, Darren, T., Wake Forest NC 27587 (US)
(74) Representative: Novagraaf Group
(86) International application number: PCT/US2012/034085
(87) International publication number: WO 2012/145402

(56) References cited:
- EP-A2- 2 214 282
- WO-A2-99/26330
- US-A1- 2009 179 490
- US-A1- 2009 210 737

## Description

### FIELD OF THE INVENTION

The present disclosure relates to the field of information technology (IT) equipment. In particular, the present disclosure relates to power supply, power distribution, and environmental control systems and methods used in IT applications.

### BACKGROUND

As IT systems grow in complexity with increasing numbers of servers, maintaining the conditions for proper operation of the IT systems becomes more difficult. Collecting and analyzing information regarding equipment such as power supply, power distribution, and environmental control units that are responsible for maintaining proper operating conditions of the IT systems becomes exceedingly important.

One example where this information is particularly useful is in data center applications. As the costs of energy and, in particular, electricity increases, having up-to-date information regarding power delivery to the various IT systems within the data center becomes increasingly important.

This information enables data center managers to optimize power consumption via adequate planning, right-sizing of energy supply to data center equipment, power balancing, load shedding, overload protection, efficient problem diagnosis, and so on. Additionally, in some data center applications, managers may be required to maintain up-to-date power consumption information in order to monitor reliability and reduce troubleshooting time in case of failure.

Furthermore reference is made to WO 99 26 330 A2, which relates to a power supply which detects power requirements of an electrical device and configures itself to provide the correct power to the device. By using a connector that isolates the device from its battery, the power supply can provide power to the device, recharge the battery, recharge the battery while at the same time providing power to the device, or provide power to the device while preventing the battery from being recharged. A switch used with the connector creates various circuits and is controllable by the power supply, the electrical device, by signals from the electrical device, or by a third device. The power supply may provide power to a plurality of devices and may be used with other power supplies to form a power grid. A master control unit receives inputs from each of the power supplies and controls the delivery and supply of power.

EP 2 214 282 A2 relates to a power distributing system including at least one power transmitting device for transmitting power and at least one power receiving device for receiving the power transmitted from the power transmitting device. The power transmitting device includes a power generating means for generating power, and an information transmitting means for transmitting information containing power information related to the power generated by the power generating means and specific information on the power generating means. The power receiving device includes an information receiving means for receiving the information transmitted by the information transmitting means and a power consumption control means for controlling consumption of power generated by the power generating means based on the information received by the information receiving means.

US 2009 / 210 737 A1 relates to a power supplying system configured so that a power supply server for supplying power and a client for receiving power are connected through a bus line on which an information signal representing information and power exist superimposed on one another, and the information signal is exchanged between the power supply server and the client. To the bus line of the power supplying system, a monitoring apparatus to monitor at least one of the information signal and power information related to power is connected. The monitoring apparatus includes a receiving portion to detect an information signal existing on the bus line, and a display control portion to display at least one of the information signal and the power information exchanged between the power supply server and the client.

WO 2011/026047 A1 relates to a power supply controlling apparatus including a control portion to measure voltage at the input port and configures to intervene in case the voltage is above a predetermined threshold.

US 2009 / 179 490 A1 discloses a power supply controlling apparatus including a control portion to measure a consumption current value of a current supplied to a controlled device, and to control on/off states of the current supplied to the controlled device, a communication portion that transmits a given command to the controlled device, and receives a response to the given command, and a monitor portion that monitors a state of the controlled device based on the consumption current value of the controlled device measured by the control portion, and a life or death state of the controlled device by the given command.

### SUMMARY OF THE INVENTION

In accordance with the present invention, a power distribution system as set forth in claim 1 is provided. Further embodiments of the invention are inter alia disclosed in the dependent claims.

The invention will be disclosed in the following detailed description. More specifically, the detailed description and the accompanying drawings disclose a number of examples, aspects and embodiments provided for the understanding of the invention. The unclaimed embodiments are identified as such in the description and the scope of the invention is defined uniquely by the appended claims.

### BRIEF DESCRIPTION OF THE DRAWINGS

The accompanying drawings, which are incorporated in and constitute a part of the specification, illustrate various example systems, methods, and so on, that illustrate various example embodiments.

It will be appreciated that the illustrated element boundaries (e.g., boxes, groups of boxes, or other shapes) in the figures represent one example of the boundaries. One of ordinary skill in the art will appreciate that one element may be designed as multiple elements or that multiple elements may be designed as one element. An element shown as an internal component of another element may be implemented as an external component and vice versa. Furthermore, elements may not be drawn to scale.
**Figure 1** illustrates an exemplary embodiment of a power distribution system disposed in a server rack.
**Figure 2** illustrates another exemplary embodiment of a power distribution system disposed in a server rack.
**Figure 3** illustrates a block diagram of an exemplary power distribution system including a remote device.
**Figure 4** is a flow chart illustrating an example method for wirelessly communicating operational parameters of an information technology (IT) equipment power supply, power distribution, or environment control apparatus.
**Figure 5** is a flow chart illustrating another example method for wirelessly communicating operational parameters of an information technology (IT) equipment power supply, power distribution, or environment control apparatus.

### DETAILED DESCRIPTION

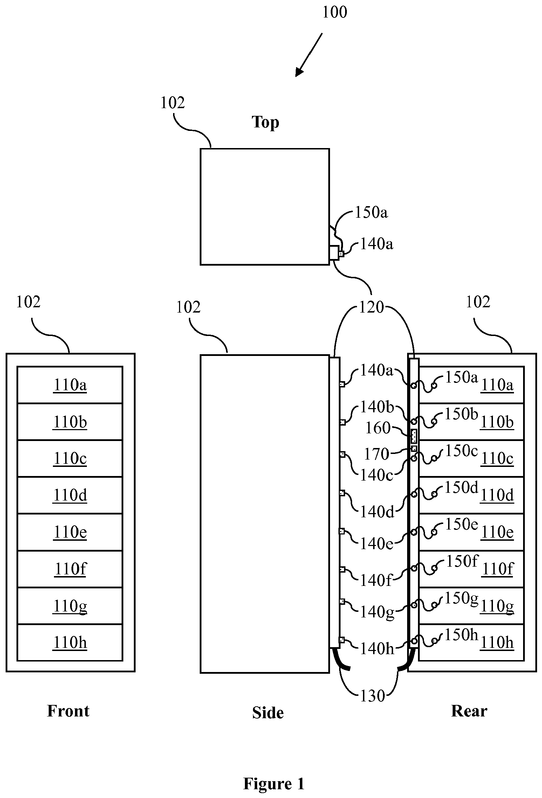

**Figure 1** illustrates an exemplary embodiment of a power distribution system 100. Power distribution system includes a power distribution unit (PDU) 120 disposed in a server rack 102. The server rack 102 includes eight servers 110a-h. Other server rack configurations may include less or more than eight servers. The PDU 120 is mounted vertically along the rear of the rack 102. In other embodiments, the PDU 120 mounts in configurations other than vertical. The PDU 120 includes an input connection 130. The PDU 120 receives power via the input connection 130. The PDU 120 also includes power outputs 140a-h that distribute power to the servers 110a-h. In the illustrated embodiment, the PDU 120 includes eight power outputs 140a-h to match the number of servers 110a-h or server slots in the rack 102. In other embodiments, the PDU 120 includes less or more than eight power outputs. Each of the servers 110a-h receives power from the power outputs 140a-h via connections 150a-h.

The PDU 120 includes a display 160 for a user or data center manager to monitor the status of the PDU 120. For example, the display 160 may enable a user to monitor operational parameters such as the current that each of the power outputs 140a-h delivers to the servers 110ah. In the illustrated embodiment, the PDU 120 further includes a control interface 170 for a user or data center manager to control the operation of the PDU 120. For example, via the control interface 170, a user may shut-off power out of the PDU 120 or a user may shut-off power out of a specific one of the power outputs 140a-h. Control interface 170 may be, for example, a button, a switch, or other similar control. The display 160 and the control interface 170 together constitute a user interface which may include other features helpful to monitor or control the operation of the PDU 120. In an example embodiment (not shown), display 160 and control interface 170 may be combined into a single integrated control interface. For example, a user may monitor the PDU 120 via a touch screen display and also control operation of the PDU 120 via the touch screen display.

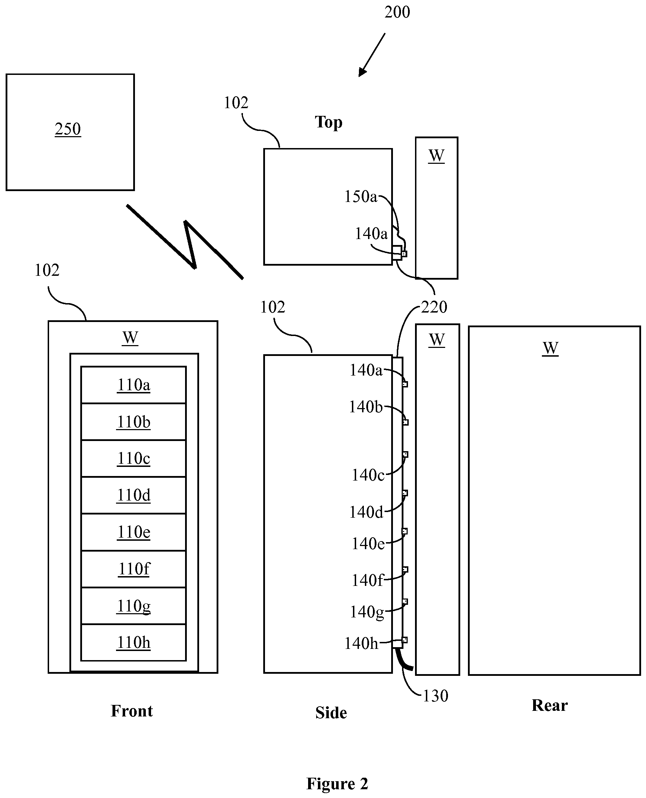

**Figure 2** illustrates another exemplary embodiment of a power distribution system 200. Power distribution system 200 includes a power distribution unit 220 disposed in a server rack 102. In order to maximize space in the data center, racks, such as server rack 102, are commonly installed with their rear in close proximity to a wall, such as wall W, or another rack, or other structure. The close proximity of the rear of rack 102 to the wall W may make it difficult for a user to gain access to the display 160 or the control 170. Thus, in an example embodiment, power distribution system 100 further includes a remote device 250 for communicating with PDU 220 and for monitoring operational parameters of PDU 220.

It should be understood that, although **Figure 2** illustrates remote device 250 communicating wirelessly with PDU 220, remote device 250 may also be configured to communicate with PDU 220 via a wired connection.

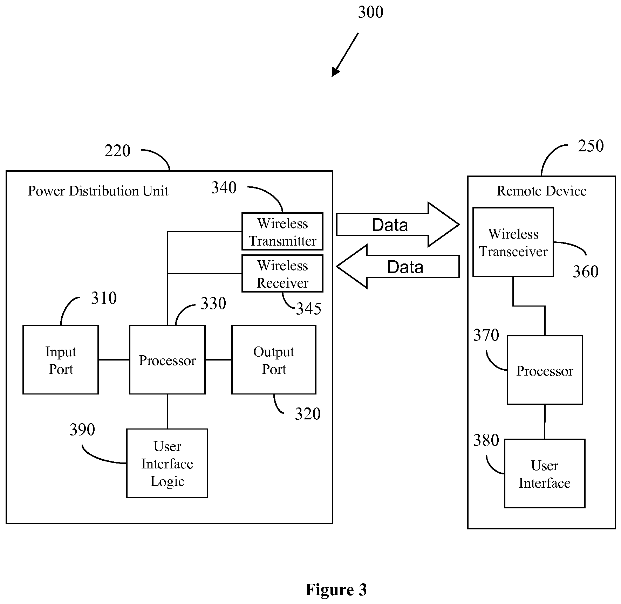

**Figure 3** illustrates a block diagram 300 of the exemplary power distribution system 200 of **Figure 2**. Power distribution system 200 includes a PDU 220 and a remote device 250. The PDU 220 distributes power to information technology (IT) equipment within, for example, a data center. Although, for ease of explanation, this disclosure discusses embodiments of the present invention in the context of a PDU, the present invention is also applicable to other power delivering or power distribution equipment within the IT or data center environment such as power supply units, environmental control units, and so on.

The PDU 220 includes an input port 310 that connects to a power source. For example, the input port 310 may connect to an electrical service feed, to an upstream power distribution unit, to an uninterruptible power supply, to battery backup, and so on. The input port 310 may include electro/mechanical connections such as socket/plug combinations, terminal blocks, lugs, bolts, and so on. The electro/mechanical connections may be fixed or removable connections. In one embodiment (not shown), the PDU 220 includes multiple input ports.

In some unclaimed embodiments (not shown), the power distribution system 200 may include a power supply unit or an environmental control unit instead of a PDU. In such embodiments, the input port may also connect to an electrical service feed, to a power distribution unit, to an uninterruptible power supply, to battery backup, and so on.

The PDU 220 further includes an output port 320 to which IT equipment connects for the PDU 300 to distribute power to the IT equipment. Examples of IT equipment that may connect to the PDU 300 include mainly computer servers, but also monitor displays, peripheral equipment, and so on. In unclaimed embodiments (not shown) where the power distribution system 200 includes a power supply instead of a PDU, examples of IT equipment that may connect to an output port of the power supply include PDU, computer servers, monitor displays, peripheral equipment, backup equipment including batteries, and so on. In unclaimed embodiments (not shown) where the power distribution system 200 includes an environmental control unit, the output port may distribute thermal power (measured in, for example, BTU/h) within the data center in the form of heat or heat removed.

The PDU 220 includes a processor 330. In one unclaimed embodiment, the processor 330 operably connects to the input port 310. In another unclaimed embodiment, the processor operably connects to the output port 320. In yet another embodiment, the processor 330 operably connects to both the input port 310 and the output port 320.

In one embodiment, the processor 330 receives data representing operational parameters of the input port 310 or the output port 320. The operational parameters may include current, voltage, power (in Watts, VA, BTU/h, and so on), real power, reactive power, energy (BTU, joules, and so on), power factor, harmonic distortion, and so on. The processor 330 may receive data representing measured or calculated operational parameters of the input port 310 or the output port 320. The processor 330 may also receive data representing measured operational parameters and convert the data representing the measured operational parameters into calculated parameters. For example, the processor 330 may receive measured current and voltage, and from these parameters calculate instantaneous power.

In another embodiment, the processor 330 transmits signals controlling functionality of the input port 310 or the output port 320. For example, in one embodiment, the processor 330 transmits a turn-off signal to a relay or other interrupting device associated with the output port 320. The turn-off signal commands the relay or other interrupting device to interrupt or turn-off power to the output port 320.

The PDU 220 further includes a wireless transmitter 340 operably connected to the processor 330. The transmitter 340 transmits wireless signals including data representing the operational parameters. For example, the transmitter 340 may transmit wireless signals including data representing the measured current or voltage, or the calculated power at the input port 310 or the output port 320.

In one embodiment, the PDU 220 further includes a receiver 345 that receives wireless signals including data representing operational parameters. In one embodiment, the operational parameters include set points or thresholds related to the functionality of the input port 310 or the output port 320. For example, the receiver 345 may receive wireless signals including data representing an input port voltage threshold. If the voltage measured at the input port 310 exceeds the voltage threshold, the processor 330 turns off the input port 310 or the output port 320. In another example, the receiver 345 may receive wireless signals including data representing a remote output port turn-off signal. In response to the output port turn-off signal, the processor 330 turns off the output port 320. In an example embodiment, transmitter 340 and receiver 345 may be a single device such as a transceiver (not shown).

Although the transmitter 340 is illustrated as separate from the receiver 345, it should be understood that the transmitter 340 and the receiver 345 may be part of the same component (i.e., a transceiver). Although the transmitter 340 and the receiver 345 are illustrated as separate from the processor 330 it should be understood that the transmitter 340, the receiver 345, or the processor 330 may be part of the same component.

The wireless transmitter 340 and the wireless receiver 345 are configured to wirelessly communicate with a remote device 250. The remote device 250 includes a wireless transceiver 360, a processor 370, and a user interface 380. Via the user interface 380, a user or data center manager can monitor operational parameters of the input port 310 or the output port 320 transmitted by the PDU 220 through the wireless transmitter 340 and received by the remote device 250 through the wireless transceiver 360. For example, a user may monitor the measured voltage or current, or the calculated power at the output port 320. In one embodiment, the PDU 220 transmits only measured operational parameters to the remote device 250 and the processor 370 of the remote device 250 calculates operational parameters based on the received measured operational parameters. The remote device 250 may then display the calculated operational parameters via the user interface 380.

In one embodiment, via the user interface 380, a user or data center manager can control operational parameters of the input port 310 or the output port 320. For example, via the user interface 380 the user or data center manager may set an input port voltage threshold. The remote device 250 transmits the input port voltage threshold to the PDU 220. If the voltage measured at the input port 310 exceeds the voltage threshold, the processor 330 turns off the input port 310 or the output port 320. In another unclaimed embodiment, via the user interface 380 the user or data center manager may command the output port 320 off. In that example, the remote device 250 transmits an output port turn-off signal to the PDU 220, and the processor 330 turns off the output port 320 in response to the output port turn-off signal.

The PDU 220 and the remote device 250 communicate directly with each other via wireless signals without the necessity of additional infrastructure such as a computer network. In one unclaimed embodiment, the direct communication between the PDU 220 and the remote device 250 could be implemented in a non standard communications protocol. In another embodiment, the direct communication between the PDU 220 and the remote device 250 is implemented in a standard communication protocol (e.g., Wi-Fi (IEEE 802.11), Bluetooth (IEEE 802.15.1), Zigbee (IEEE 802.15.4), combinations thereof, and so on). While individual network protocols or standards are described, it is to be appreciated that communications between the PDU 220 and the remote device 250 may be implemented as combinations thereof.

In one unclaimed embodiment, the remote device 250 is a dedicated device designed specifically to communicate with IT power distribution or generation equipment such as PDU 220. In another embodiment, the remote device 250 is a non-dedicated device. For example, the remote device 250 may be one or a combination of various devices known in the art (e.g., personal digital assistant, smart phone, wireless telephone, cellular telephone, tablet computer, and so on).

In one unclaimed embodiment, the user interface 380 incorporates a dedicated application (e.g., an app) designed specifically to communicate with IT power distribution or generation equipment such as PDU 220. In another embodiment, the user interface 380 incorporates a non-dedicated interface such as a web browser. The PDU 220 may generate web pages viewable through the web browser in the remote device 250. For example, the PDU 220 may generate an operational parameters web page incorporating the various operational parameters of the input port 310 or the output port 320 and transmit the operational parameters web page to the remote device 250 for display via the user interface 380. In one embodiment, the PDU 220 transmits the operational parameters and the remote device 250 generates the output (e.g., web page) to be displayed via the user interface 380.

In one unclaimed embodiment, the user interface 380 incorporates an input mechanism (e.g., keyboard, buttons, click wheel, track ball, touch screen, voice command, and so on) that a user or data center manager can operate to interface with the remote device 250.

The remote device 250 may request and the PDU 220 may communicate the operational parameter information through the direct connection between the wireless transmitter 340, the wireless receiver 345, and the wireless transceiver 360 for display via the user interface 380. Alternatively, the PDU 220 may communicate the operational parameters information to the remote device 250 without receiving a request.

In one unclaimed embodiment, the PDU 220 may require the remote device 250 to provide credentials such as username, password, account number, security key, MAC number and so on, or a combination thereof in order to communicate with the PDU 220. The PDU 220 may grant or deny access based on the credentials that the remote device 250 provides. In another unclaimed embodiment, the credentials required from the remote device 250 are those specified in existing protocols associated with the direct wireless communication between the PDU 220 and the remote device 250 (e.g., Wi-Fi Protected Access (WPA) for Wi-Fi connections, and so on).

In one embodiment, the PDU 220 further includes a user interface logic 390. The remote device 250 transmits and the PDU 220 receives a signal including data identifying the remote device 250 or the user interface 380. The user interface logic 390 determines a format in which the data representing the operational parameters is transmitted based on the data identifying the remote device 250 or the user interface 380. For example, if the remote device 250 transmits and the PDU 220 receives a signal including data identifying the remote device 250 as a particular dedicated device, the user interface logic 390 determines a format in which the data representing the operational parameters will be transmitted that is tailored to the particular dedicated device. In another example, if the remote device 250 transmits and the PDU 220 receives a signal including data identifying the remote device 250 as a particular non-dedicated device (e.g., a particular smart phone model) the user interface logic 390 determines a format in which the data representing the operational parameters will be transmitted that is tailored to the particular non-dedicated device.

In an example embodiment, PDU 220 also includes a display and a control interface (not shown) for monitoring PDU 220 and for controlling PDU 220. Thus, a user has the option of either communicating with and monitoring PDU 220 at a server rack or remotely via remote device 250.

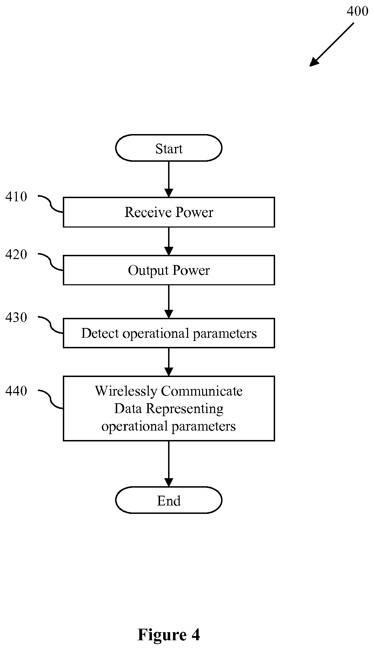

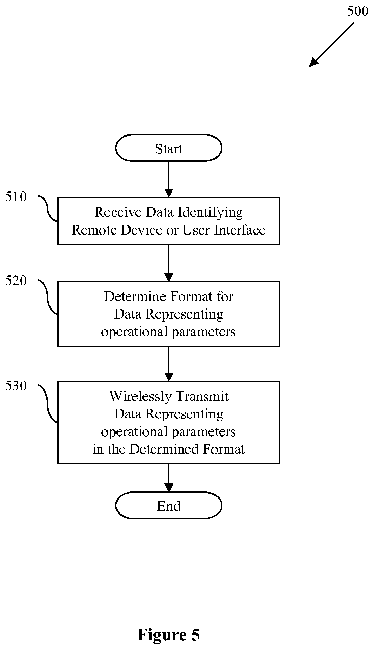

Example methods may be better appreciated with reference to the flow diagrams of Figures 4 and 5. While for purposes of simplicity of explanation, the illustrated methodologies are shown and described as a series of blocks, it is to be appreciated that the methodologies are not limited by the order of the blocks, as some blocks can occur in different orders or concurrently with other blocks from that shown or described. Moreover, less than all the illustrated blocks may be required to implement an example methodology. Furthermore, additional or alternative methodologies can employ additional, not illustrated blocks.

In the flow diagrams, blocks denote "processing blocks" that may be implemented with logic. The processing blocks may represent a method step or an apparatus element for performing the method step. A flow diagram does not depict syntax for any particular programming language, methodology, or style (e.g., procedural, object-oriented). Rather, a flow diagram illustrates functional information one skilled in the art may employ to develop logic to perform the illustrated processing. It will be appreciated that in some examples, program elements like temporary variables, routine loops, and so on, are not shown. It will be further appreciated that electronic and software applications may involve dynamic and flexible processes so that the illustrated blocks can be performed in other sequences that are different from those shown or that blocks may be combined or separated into multiple components. It will be appreciated that the processes may be implemented using various programming approaches like machine language, procedural, object oriented or artificial intelligence techniques.

Figure 4 is a flow chart illustrating an unclaimed example method 400 for wirelessly communicating operational parameters of an information technology (IT) equipment power supply, power distribution, or environmental control apparatus. At 410, an apparatus receives power at an input from a power source. At 420, the apparatus outputs power at an output. In one example, the outputted power is electrical power measured in Watts, VA, and so on. In another example, the outputted power is thermal power measured in BTU/h, joules/sec, and so on.

At 430, a processor detects operational parameters associated with the input and the output. The operational parameters may include current, voltage, power (in Watts, VA, BTU/h, and so on), real power, reactive power, energy (BTU, joules, and so on), power factor, harmonic distortion, and so on. In one example, detecting the operational parameters includes detecting set points or thresholds associated with the input or the output as received from a remote device.

At 440, a transceiver communicates data representing the operational parameters of the input or the output. In one example, the transceiver communicating data includes the transceiver transmitting wireless signals to a remote device. In another example, the transceiver communicating data includes the transceiver receiving wireless signals from a remote device. In yet another example, the transceiver communicating data includes the transceiver both transmitting and receiving wireless signals to and from a remote device.

In one example (not shown), the method 400 further comprises the step of the processor controlling the operation of the input or the output based on detected set points or thresholds associated with the input or the output and data received from a remote device.

Figure 5 is a flow chart illustrating another unclaimed example method 500 for wirelessly communicating operational parameters of an information technology (IT) equipment power supply, power distribution, or environment control apparatus. At 510, an IT equipment power supply, power distribution, or environmental control apparatus receives, from a remote device, data identifying the remote device or a user interface within the remote device. In an example, the IT equipment power supply, power distribution, or environmental control apparatus receives the data wirelessly. At 520, a processor determines a format in which to transmit data representing operational parameters of the IT equipment power supply, power distribution, or environmental control apparatus to the remote device based on the data identifying the remote device or the user interface. At 530, a transceiver transmits the data representing the operational parameters to the remote device in the determined format.

In one example, methodologies are implemented as processor executable instructions or operations provided on a computer-readable medium. Thus, in one example, a computer-readable medium may store processor executable instructions operable to perform the methods 400 or 500. While the above example method is described being provided on a computer-readable medium, it is to be appreciated that other example methods described herein can also be provided on a computer-readable medium.

While **Figures 4** and **5** illustrate various actions occurring in serial, it is to be appreciated that various actions illustrated in **Figures 4** and **5** could occur substantially in parallel. While a number of processes are described, it is to be appreciated that a greater or lesser number of processes could be employed and that lightweight processes, regular processes, threads, and other approaches could be employed. It is to be appreciated that other example methods may, in some cases, also include actions that occur substantially in parallel.

The following includes definitions of selected terms employed herein. The definitions include various examples, forms, or both of components that fall within the scope of a term and that may be used for implementation. The examples are not intended to be limiting. Both singular and plural forms of terms may be within the definitions.

To the extent that the term "includes" or "including" is employed in the detailed description or the claims, it is intended to be inclusive in a manner similar to the term "comprising" as that term is interpreted when employed as a transitional word in a claim. Furthermore, to the extent that the term "or" is employed in the detailed description or claims (e.g., A or B) it is intended to mean "A or B or both". When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995).

"Logic," as used herein, includes but is not limited to hardware, firmware, software or combinations of each to perform a function or an action, or to cause a function or action from another logic, method, or system. For example, based on a desired application or needs, logic may include a software controlled microprocessor, discrete logic like an application specific integrated circuit (ASIC), a programmed logic device, a memory device containing instructions, or the like. Logic may include one or more gates, combinations of gates, or other circuit components. Logic may also be fully embodied as software. Where multiple logical logics are described, it may be possible to incorporate the multiple logical logics into one physical logic. Similarly, where a single logical logic is described, it may be possible to distribute that single logical logic between multiple physical logics.

An "operable connection," or a connection by which components are "operably connected to," or "in circuit with" is one by which the operably connected components or the operable connection perform its intended purpose. For example, two components may be operably connected to each other directly or through one or more intermediate components. An "operable connection," or a connection by which entities are "operably connected to" or "in circuit with" other entities is one in which signals, physical communications, or logical communications may be sent or received. Typically, an operable connection includes a physical interface, an electrical interface, or a data interface, but it is to be noted that an operable connection may include differing combinations of these or other types of connections sufficient to allow operable control. For example, two entities can be operably connected by being able to communicate signals to each other directly or through one or more intermediate entities like a processor, operating system, a logic, software, or other entity. Logical or physical communication channels can be used to create an operable connection.

"Signal," as used herein, includes but is not limited to one or more electrical, electromagnetic or optical signals, analog or digital signals, data, one or more computer or processor instructions, messages, a bit or bit stream, or other means that can be received, transmitted or detected.

"Software," as used herein, includes but is not limited to, one or more computer or processor instructions that can be read, interpreted, compiled, or executed and that cause a computer, processor, or other electronic device to perform functions, actions or behave in a desired manner. The instructions may be embodied in various forms like routines, algorithms, modules, methods, threads, or programs including separate applications or code from dynamically or statically linked libraries. Software may also be implemented in a variety of executable or loadable forms including, but not limited to, a stand-alone program, a function call (local or remote), a servelet, an applet, instructions stored in a memory, part of an operating system or other types of executable instructions. It will be appreciated by one of ordinary skill in the art that the form of software may depend, for example, on requirements of a desired application, the environment in which it runs, or the desires of a designer/programmer or the like. It will also be appreciated that computer-readable or executable instructions can be located in one logic or distributed between two or more communicating, co-operating, or parallel processing logics and thus can be loaded or executed in serial, parallel, massively parallel and other manners.

Suitable software for implementing the various components of the example systems and methods described herein may be produced using programming languages and tools like Java, Java Script, Java.NET, ASP.NET, VB.NET, Cocoa, Pascal, C#, C++, C, CGI, Perl, SQL, APIs, SDKs, assembly, firmware, microcode, or other languages and tools. Software, whether an entire system or a component of a system, may be embodied as an article of manufacture and maintained or provided as part of a computer-readable medium. Another form of software may include signals that transmit program code of the software to a recipient over a network or other communication medium. Thus, in one example, a computer-readable medium has a form of signals that represent the software/firmware as it is downloaded from a web server to a user. In another example, the computer-readable medium has a form of the software/firmware as it is maintained on the web server. Other forms may also be used.

"User," as used herein, includes but is not limited to one or more persons, software, computers or other devices, or combinations of these.

Some portions of the detailed descriptions are presented in terms of algorithms and symbolic representations of operations on data bits within a memory. These algorithmic descriptions and representations are the means used by those skilled in the art to convey the substance of their work to others. An algorithm is here, and generally, conceived to be a sequence of operations that produce a result. The operations may include physical manipulations of physical quantities. Usually, though not necessarily, the physical quantities take the form of electrical or magnetic signals capable of being stored, transferred, combined, compared, and otherwise manipulated in a logic and the like.

It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities. Unless specifically stated otherwise, it is appreciated that throughout the description, terms like processing, computing, calculating, determining, displaying, or the like, refer to actions and processes of a computer system, logic, processor, or similar electronic device that manipulates and transforms data represented as physical (electronic) quantities.

While example systems, methods, and so on, have been illustrated by describing examples, and while the examples have been described in considerable detail, it is not the intention to restrict or in any way limit the scope of the appended claims to such detail. It is, of course, not possible to describe every conceivable combination of components or methodologies for purposes of describing the systems, methods, and so on, described herein. Additional advantages and modifications will readily appear to those skilled in the art. Therefore, the invention is not limited to the specific details, and illustrative examples shown or described. Thus, this application is intended to embrace alterations, modifications, and variations that fall within the scope of the appended claims. Furthermore, the preceding description is not meant to limit the scope of the invention. Rather, the scope of the invention is to be determined by the appended claims.

## Claims

1. A power distribution system (100; 200) comprising:
a power distribution unit, PDU, (120; 220) configured to communicate directly, without the necessity of additional computer network infrastructure, with a remote device (250) using at least one of standard wireless communication protocols consisting of Wi-Fi in accordance with IEEE 802.11, Bluetooth in accordance with IEEE 802.15.1 and/or Zigbee in accordance with IEEE 802.15.3; the PDU (120; 220) comprising:
at least one input port (130; 310) configured to operably connect to a power source;
at least one output port (140a-h; 320) configured to operably connect to a power load (110ah) and to deliver power to the power load (110a-h);
at least one receiver (345) configured to receive wireless signals from the remote device (250) including one of data representing an input port voltage threshold and data representing a remote output port turn-off signal;
at least one transmitter (340) configured to wirelessly transmit data representative of the operational parameters to the remote device (250); and
at least one processor (330) operably connected to the at least one receiver (345), to the at least one transmitter (340), to the at least one input port (130; 310) and to the at least one output port (140a-h; 320) and configured to receive data representative of operational parameters of the at least one input port (130; 310) and the at least one output port (140a-h; 320);
wherein the at least one processor (330) is configured to one of:
turn-off the at least one input port (130; 310) or the at least one output port (140a-h; 320) if the voltage measured at the at least one input port (130; 310) exceeds the input port voltage threshold; and
turn-off the at least one output port (140a-h; 320) in response to the remote output port turn-off signal.

2. The power distribution system (100; 200) of claim 1, wherein the operational parameters include at least one of current and voltage measured at at least one of the input port (130; 310) and the output port (140a-h; 320), and wherein the at least one transmitter (340) is configured to wirelessly transmit data representative of the at least one of the current and the voltage.

3. The power distribution system (100; 200) of claim 1,
wherein the at least one receiver (345) is configured to wirelessly receive data representative of the operational parameters.

4. The power distribution system (100; 200) of claim 3,
wherein the operational parameters include one or more of set points and thresholds related to the one or more of the at least one input port (130; 310) and the at least one output port (140a-h; 320), and
wherein the processor (330) is configured to control the functionality of the one or more of the at least one input port (130; 310) and the at least one output port (140a-h; 320) based on the one or more of the set points and the thresholds, or
wherein the at least one receiver (345) is configured to wirelessly receive, from a remote device (250), data identifying at least one of the remote device (250) and a user interface (380) within the remote device (250), wherein the at least one transmitter (330) is further configured to wirelessly transmit the data representative of the operational parameters to the remote device (250), and wherein the power PDU (120; 220) further includes:
a user interface logic (390) configured to determine a format in which the data representative of the operational parameters is transmitted based on the data identifying the at least one of the remote device (250) and the user interface (380), and wherein the at least one transmitter is configured to wirelessly transmit the data representative of the operational parameters in the determined format.

5. The power distribution system (100; 200) of claim 1, wherein the PDU (120; 220) is one of a power supply and a power distribution unit,
wherein the power delivered is electrical power,
wherein the operational parameters include at least one of current and voltage measured at at least one of the input port (130; 310) and the output port (140a-h; 320), and
wherein the at least one wireless transmitter (340) is configured to wirelessly transmit signals including data representing the at least one of the current and the voltage.

6. The power distribution system (100; 200) of claim 1,
wherein the PDU (120; 220) is an environmental control unit,
wherein the operational parameters include at least one of power and energy delivered by the output, and wherein the at least one transmitter (340) is configured to wirelessly transmit signals including data representing the at least one of the power and the energy delivered by the output..

7. The power distribution system (100; 200) of claim 1,
wherein the at least one wireless receiver (345) is in circuit with the at least one processor (330) and configured to wirelessly receive signals including data representing the operational parameters.

8. The power distribution system (100; 200) of claim 1 wherein the PDU (120; 220) further comprises:
a display (166) for enabling a user to monitor the operational parameters; and
a control interface (170, 380) for enabling a user to control operation of the at least one processor (330).

9. The power distribution system (100; 200) of claim 1,
wherein the at least one wireless receiver (345) is in circuit with the at least one processor (330) and configured to wirelessly receive signals including data representing the operational parameters, wherein the operational parameters include one or more of set points and thresholds related to the one or more of the at least one input port (130; 310) and the at least one output port (140a-h; 320), and wherein the one or more of the set points and the thresholds controls the functionality of the one or more of the at least one input port (130; 310) and the at least one output port (140a-h; 320).

10. The power distribution system (100; 200) of claim 1,
wherein the at least one wireless receiver (345) is in circuit with the at least one processor (330) and configured to wirelessly receive signals from a remote device (250) including data identifying at least one of the remote device (250) and a user interface (380) within the remote device (250); and
wherein the PDU (120; 220) further comprises a user interface logic (390) configured to determine a format in which to transmit the data representing the operational parameters to the remote device (250) based on the data identifying the at least one of the remote device (250) and the user interface (380),
wherein the at least one wireless transmitter (340) is configured to wirelessly transmit signals including the data representing the operational parameters to the remote device (250) in the determined format.

11. The power distribution system (100; 200) of claim 1, wherein the PDU (120; 220) is configured to generate web pages viewable through a web browser in a remote device (250) based on the operational parameters of the at least one input port (130; 310) or the at least one output port (140a-h; 320).

12. The power distribution system (100; 200) of claim 11, wherein the PDU (120; 220) generates an operational parameters web page including the operational parameters of the at least one input port (130; 310) or the at least one output port (140a-h; 320), and further transmits the operational parameters web page to the remote device (250) for display via a user interface (380).

13. The power distribution system (100; 200) of claim 12, wherein the PDU (120; 220) is disposed in a server rack (102).

14. The power distribution system (100; 200) of claim 13, wherein the PDU (120; 220) is disposed on a rear of the server rack (102), wherein the rear is positioned proximate to a wall, another rack or other structure.

## Patentansprüche

1. Leistungsverteilungssystem (100; 200), umfassend:
eine Leistungsverteilungseinheit, PDU, (120; 220), die dazu konfiguriert ist, ohne die Notwendigkeit einer zusätzlichen Computernetzwerkinfrastruktur direkt mit einer entfernten Vorrichtung (250) unter Verwendung von mindestens einem von standardmäßigen drahtlosen Kommunikationsprotokollen, bestehend aus Wi-Fi gemäß IEEE 802.11, Bluetooth gemäß IEEE 802.15.1 und/oder Zigbee gemäß IEEE 802.15.3, zu kommunizieren; die PDU (120; 220) umfassend:
mindestens einen Eingangsanschluss (130; 310), der dazu konfiguriert ist, betriebsmäßig mit einer Leistungsquelle verbunden zu werden;
mindestens einen Ausgangsanschluss (140a-h; 320), der dazu konfiguriert ist, betriebsmäßig mit einer Leistungslast (110a-h) verbunden zu werden und Leistung an die Leistungslast (110a-h) zu liefern;
mindestens einen Empfänger (345), der dazu konfiguriert ist, drahtlose Signale von der entfernten Vorrichtung (250) zu empfangen, einschließlich eines von Daten, die einen Eingangsanschluss-Spannungsschwellenwert darstellen, und Daten, die ein Ausschaltsignal des entfernten Ausgangsanschlusses darstellen;
mindestens einen Sender (340), der dazu konfiguriert ist, Daten, die die Betriebsparameter darstellen, drahtlos an die entfernte Vorrichtung (250) zu übertragen; und
mindestens einen Prozessor (330), der betriebsmäßig mit dem mindestens einen Empfänger (345), dem mindestens einen Sender (340), dem mindestens einen Eingangsanschluss (130; 310) und dem mindestens einen Ausgangsanschluss (140a-h; 320) verbunden ist und dazu konfiguriert ist, Daten zu empfangen, die Betriebsparameter des mindestens einen Eingangsanschlusses (130; 310) und des mindestens einen Ausgangsanschlusses (140a-h; 320) darstellen;
wobei der mindestens eine Prozessor (330) konfiguriert ist zum:
Ausschalten des mindestens einen Eingangsanschlusses (130; 310) oder des mindestens einen Ausgangsanschlusses (140a-h; 320), wenn die an dem mindestens einen Eingangsanschluss (130; 310) gemessene Spannung den Eingangsanschluss-Spannungsschwellenwert überschreitet; und
Ausschalten des mindestens einen Ausgangsanschlusses (140a-h; 320) als Reaktion auf das Ausschaltsignal des entfernten Ausgangsanschlusses.

2. Leistungsverteilungssystem (100; 200) nach Anspruch 1, wobei die Betriebsparameter mindestens eines von Strom und Spannung einschließen, die an mindestens einem von dem Eingangsanschluss (130; 310) und dem Ausgangsanschluss (140a-h; 320) gemessen werden, und wobei der mindestens eine Sender (340) dazu konfiguriert ist, drahtlos Daten zu übertragen, die mindestens eines von dem Strom und der Spannung darstellen.

3. Leistungsverteilungssystem (100; 200) nach Anspruch 1,
wobei der mindestens eine Empfänger (345) dazu konfiguriert ist, drahtlos Daten zu empfangen, die die Betriebsparameter darstellen.

4. Leistungsverteilungssystem (100; 200) nach Anspruch 3,
wobei die Betriebsparameter eines oder mehrere von Sollwerten und Schwellenwerten einschließen, die sich auf den einen oder die mehreren des mindestens einen Eingangsanschlusses (130; 310) und des mindestens einen Ausgangsanschlusses (140a-h; 320) beziehen, und
wobei der Prozessor (330) dazu konfiguriert ist, die Funktionalität des einen oder der mehreren des mindestens einen Eingangsanschlusses (130; 310) und des mindestens einen Ausgangsanschlusses (140a-h; 320) basierend auf dem einen oder den mehreren der Sollwerte und der Schwellenwerte zu steuern, oder
wobei der mindestens eine Empfänger (345) dazu konfiguriert ist, von einer entfernten Vorrichtung (250) drahtlos Daten zu empfangen, die mindestens eines von der entfernten Vorrichtung (250) und einer Benutzerschnittstelle (380) innerhalb der entfernten Vorrichtung (250) identifizieren, wobei der mindestens eine Sender (330) ferner dazu konfiguriert ist, die Daten, die die Betriebsparameter darstellen, drahtlos an die entfernte Vorrichtung (250) zu übertragen, und wobei die Leistungs-PDU (120; 220) ferner einschließt:
eine Benutzerschnittstellenlogik (390), die dazu konfiguriert ist, basierend auf den Daten, die mindestens eines von der entfernten Vorrichtung (250) und der Benutzerschnittstelle (380) identifizieren, ein Format zu bestimmen, in dem die Daten, die die Betriebsparameter darstellen, übertragen werden, und wobei der mindestens eine Sender dazu konfiguriert ist, die Daten, die die Betriebsparameter darstellen, drahtlos in dem bestimmten Format zu übertragen.

5. Leistungsverteilungssystem (100; 200) nach Anspruch 1, wobei die PDU (120; 220) eines von einer Leistungsversorgung und einer Leistungsverteilungseinheit ist,
wobei die gelieferte Leistung elektrische Leistung ist,
wobei die Betriebsparameter mindestens eines von Strom und Spannung einschließen, die an mindestens einem von dem Eingangsanschluss (130; 310) und dem Ausgangsanschluss (140a-h; 320) gemessen werden, und
wobei der mindestens eine drahtlose Sender (340) dazu konfiguriert ist, drahtlos Signale zu übertragen, die Daten einschließen, die mindestens eines von dem Strom und der Spannung darstellen.

6. Leistungsverteilungssystem (100; 200) nach Anspruch 1,
wobei die PDU (120; 220) eine Umgebungssteuereinheit ist,
wobei die Betriebsparameter mindestens eines von Leistung und Energie einschließen, die von dem Ausgang geliefert werden, und wobei der mindestens eine Sender (340) dazu konfiguriert ist, drahtlos Signale zu übertragen, die Daten einschließen, die mindestens eines von der Leistung und der Energie darstellen, die von dem Ausgang geliefert werden.

7. Leistungsverteilungssystem (100; 200) nach Anspruch 1,
wobei der mindestens eine drahtlose Empfänger (345) mit dem mindestens einen Prozessor (330) in Schaltung ist und dazu konfiguriert ist, drahtlos Signale zu empfangen, die Daten einschließen, die die Betriebsparameter darstellen.

8. Leistungsverteilungssystem (100; 200) nach Anspruch 1, wobei die PDU (120; 220) ferner umfasst:
eine Anzeige (166), um es einem Benutzer zu ermöglichen, die Betriebsparameter zu überwachen; und
eine Steuerschnittstelle (170, 380), um es einem Benutzer zu ermöglichen, den Betrieb des mindestens einen Prozessors (330) zu steuern.

9. Leistungsverteilungssystem (100; 200) nach Anspruch 1,
wobei der mindestens eine drahtlose Empfänger (345) mit dem mindestens einen Prozessor (330) in Schaltung ist und dazu konfiguriert ist, drahtlos Signale zu empfangen, die Daten einschließen, die die Betriebsparameter darstellen, wobei die Betriebsparameter einen oder mehrere von Sollwerten und Schwellenwerten einschließen, die sich auf den einen oder die mehreren des mindestens einen Eingangsanschlusses (130; 310) und des mindestens einen Ausgangsanschlusses (140a-h; 320) beziehen, und wobei der eine oder die mehreren der Sollwerte und der Schwellenwerte die Funktionalität des einen oder der mehreren des mindestens einen Eingangsanschlusses (130; 310) und des mindestens einen Ausgangsanschlusses (140a-h; 320) steuern.

10. Leistungsverteilungssystem (100; 200) nach Anspruch 1,
wobei der mindestens eine drahtlose Empfänger (345) mit dem mindestens einen Prozessor (330) in Schaltung ist und dazu konfiguriert ist, drahtlos Signale von einer entfernten Vorrichtung (250) zu empfangen, die Daten einschließen, die mindestens eines von der entfernten Vorrichtung (250) und einer Benutzerschnittstelle (380) innerhalb der entfernten Vorrichtung (250) identifizieren; und
wobei die PDU (120; 220) ferner eine Benutzerschnittstellenlogik (390) umfasst, die dazu konfiguriert ist, basierend auf den Daten, die die mindestens eine von der entfernten Vorrichtung (250) und der Benutzerschnittstelle (380) identifizieren, ein Format zu bestimmen, in dem die Daten, die die Betriebsparameter darstellen, an die entfernte Vorrichtung (250) übertragen werden sollen,
wobei der mindestens eine drahtlose Sender (340) dazu konfiguriert ist, Signale, einschließlich der Daten, die die Betriebsparameter darstellen, drahtlos an die entfernte Vorrichtung (250) in dem bestimmten Format zu übertragen.

11. Leistungsverteilungssystem (100; 200) nach Anspruch 1, wobei die PDU (120; 220) dazu konfiguriert ist, basierend auf den Betriebsparametern des mindestens einen Eingangsanschlusses (130; 310) oder des mindestens einen Ausgangsanschlusses (140a-h; 320) Webseiten zu erzeugen, die über einen Webbrowser in einer entfernten Vorrichtung (250) sichtbar sind.

12. Leistungsverteilungssystem (100; 200) nach Anspruch 11, wobei die PDU (120; 220) eine Betriebsparameter-Webseite erzeugt, die Betriebsparameter des mindestens einen Eingangsanschlusses (130; 310) oder des mindestens einen Ausgangsanschlusses (140a-h; 320) einschließt, und ferner die Betriebsparameter-Webseite an die entfernte Vorrichtung (250) zur Anzeige über eine Benutzerschnittstelle (380) überträgt.

13. Leistungsverteilungssystem (100; 200) nach Anspruch 12, wobei die PDU (120; 220) in einem Server-Rack (102) angeordnet ist.

14. Leistungsverteilungssystem (100; 200) nach Anspruch 13, wobei die PDU (120; 220) auf einer Rückseite des Server-Racks (102) angeordnet ist, wobei die Rückseite in der Nähe einer Wand, eines anderen Racks oder einer anderen Struktur positioniert ist.

## Revendications

1. Système de distribution de puissance (100 ; 200) comprenant :
une unité de distribution de puissance, PDU, (120 ; 220) configurée pour communiquer directement, sans nécessiter d'infrastructure de réseau informatique supplémentaire, avec un dispositif distant (250) en utilisant au moins un des protocoles standard de communication sans fil constitués de Wi-Fi conformément à IEEE 802.11, Bluetooth conformément à IEEE 802.15.1 et/ou Zigbee conformément à IEEE 802.15.3 ; la PDU (120 ; 220) comprenant :
au moins un port d'entrée (130 ; 310) configuré pour se connecter fonctionnellement à une source de puissance ;
au moins un port de sortie (140a-h ; 320) configuré pour se connecter fonctionnellement à une charge de puissance (110a- h) et pour délivrer de la puissance à la charge de puissance (110a-h) ;
au moins un récepteur (345) configuré pour recevoir des signaux sans fil depuis le dispositif distant (250) incluant une parmi des données représentant un seuil de tension de port d'entrée et des données représentant un signal de coupure de port de sortie à distance ;
au moins un émetteur (340) configuré pour transmettre sans fil des données représentatives des paramètres fonctionnels au dispositif distant (250) ; et
au moins un processeur (330) connecté fonctionnellement à l'au moins un récepteur (345), à l'au moins un émetteur (340), à l'au moins un port d'entrée (130 ; 310) et à l'au moins un port de sortie (140a-h ; 320) et configuré pour recevoir des données représentatives de paramètres fonctionnels de l'au moins un port d'entrée (130 ; 310) et de l'au moins un port de sortie (140a-h ; 320) ;
dans lequel l'au moins un processeur (330) est configuré pour un parmi :
couper l'au moins un port d'entrée (130 ; 310) ou l'au moins un port de sortie (140a-h ; 320) si la tension mesurée au niveau de l'au moins un port d'entrée (130 ; 310) dépasse le seuil de tension de port d'entrée ; et
couper l'au moins un port de sortie (140a-h ; 320) en réponse au signal de coupure de port de sortie à distance.

2. Système de distribution de puissance (100 ; 200) selon la revendication 1, dans lequel les paramètres fonctionnels incluent au moins un parmi un courant et une tension mesurés au niveau d'au moins un parmi le port d'entrée (130 ; 310) et le port de sortie (140a-h ; 320), et dans lequel l'au moins un émetteur (340) est configuré pour transmettre sans fil des données représentatives d'au moins un parmi le courant et la tension.

3. Système de distribution de puissance (100 ; 200) selon la revendication 1,
dans lequel l'au moins un récepteur (345) est configuré pour recevoir sans fil des données représentatives des paramètres fonctionnels.

4. Système de distribution de puissance (100 ; 200) selon la revendication 3,
dans lequel les paramètres fonctionnels incluent un ou plusieurs parmi des points de consigne et des seuils se rapportant à celui ou ceux parmi l'au moins un port d'entrée (130 ; 310) et l'au moins un port de sortie (140a-h ; 320), et
dans lequel le processeur (330) est configuré pour commander la fonctionnalité de celui ou de ceux parmi l'au moins un port d'entrée (130 ; 310) et l'au moins un port de sortie (140a-h ; 320) sur la base de celui ou de ceux parmi les points de consigne et les seuils, ou
dans lequel l'au moins un récepteur (345) est configuré pour recevoir sans fil, depuis un dispositif distant (250), des données identifiant au moins un parmi le dispositif distant (250) et une interface utilisateur (380) au sein du dispositif distant (250), dans lequel l'au moins un émetteur (330) est configuré en outre pour transmettre sans fil les données représentatives des paramètres fonctionnels au dispositif distant (250), et dans lequel la PDU de puissance (120 ; 220) inclut en outre :
une logique d'interface utilisateur (390) configurée pour déterminer un format dans lequel les données représentatives des paramètres fonctionnels sont transmises sur la base des données identifiant l'au moins un parmi le dispositif distant (250) et l'interface utilisateur (380), et dans lequel l'au moins un émetteur est configuré pour transmettre sans fil les données représentatives des paramètres fonctionnels dans le format déterminé.

5. Système de distribution de puissance (100 ; 200) selon la revendication 1, dans lequel la PDU (120 ; 220) est une parmi une source de puissance et une unité de distribution de puissance,
dans lequel la puissance délivrée est de la puissance électrique,
dans lequel les paramètres fonctionnels incluent au moins un parmi un courant et une tension mesuré au niveau d'au moins un parmi le port d'entrée (130 ; 310) et le port de sortie (140a-h ; 320), et
dans lequel l'au moins un émetteur sans fil (340) est configuré pour transmettre sans fil des signaux incluant des données représentant l'au moins un parmi le courant et la tension.

6. Système de distribution de puissance (100 ; 200) selon la revendication 1,
dans lequel la PDU (120 ; 220) est une unité de commande environnementale,
dans lequel les paramètres fonctionnels incluent au moins une parmi la puissance et l'énergie délivrée par la sortie, et dans lequel l'au moins un émetteur (340) est configuré pour transmettre sans fil des signaux incluant des données représentant l'au moins une parmi la puissance et l'énergie délivrée par la sortie..

7. Système de distribution de puissance (100 ; 200) selon la revendication 1,
dans lequel l'au moins un récepteur sans fil (345) est dans un circuit avec l'au moins un processeur (330) et configuré pour recevoir sans fil des signaux incluant des données représentant les paramètres fonctionnels.

8. Système de distribution de puissance (100 ; 200) selon la revendication 1 dans lequel la PDU (120 ; 220) comprend en outre :
un affichage (166) pour permettre à un utilisateur de surveiller les paramètres fonctionnels ; et
une interface de commande (170, 380) pour permettre à un utilisateur de commander le fonctionnement de l'au moins un processeur (330).

9. Système de distribution de puissance (100 ; 200) selon la revendication 1,
dans lequel l'au moins un récepteur sans fil (345) est dans un circuit avec l'au moins un processeur (330) et configuré pour recevoir sans fil des signaux incluant des données représentant les paramètres fonctionnels, dans lequel les paramètres fonctionnels incluent un ou plusieurs parmi des points de consigne et des seuils se rapportant à celui ou ceux parmi l'au moins un port d'entrée (130 ; 310) et l'au moins un port de sortie (140a-h ; 320), et dans lequel celui ou ceux parmi les points de consigne et les seuils commandent la fonctionnalité de celui ou de ceux parmi l'au moins un port d'entrée (130 ; 310) et l'au moins un port de sortie (140a-h ; 320).

10. Système de distribution de puissance (100 ; 200) selon la revendication 1,
dans lequel l'au moins un récepteur sans fil (345) est dans un circuit avec l'au moins un processeur (330) et configuré pour recevoir sans fil des signaux depuis un dispositif distant (250) incluant des données identifiant au moins un parmi le dispositif distant (250) et une interface utilisateur (380) au sein du dispositif distant (250) ; et
dans lequel la PDU (120 ; 220) comprend en outre une logique d'interface utilisateur (390) configurée pour déterminer un format dans lequel il faut transmettre les données représentant les paramètres fonctionnels au dispositif distant (250) sur la base des données identifiant l'au moins un parmi le dispositif distant (250) et l'interface utilisateur (380),
dans lequel l'au moins un émetteur sans fil (340) est configuré pour transmettre sans fil des signaux incluant les données représentant les paramètres fonctionnels au dispositif distant (250) dans le format déterminé.

11. Système de distribution de puissance (100 ; 200) selon la revendication 1, dans lequel la PDU (120 ; 220) est configurée pour générer des pages Web visibles par l'intermédiaire d'un navigateur Web dans un dispositif distant (250) sur la base des paramètres fonctionnels de l'au moins un port d'entrée (130 ; 310) ou de l'au moins un port de sortie (140a-h ; 320).

12. Système de distribution de puissance (100 ; 200) selon la revendication 11, dans lequel la PDU (120 ; 220) génère une page Web de paramètres fonctionnels incluant les paramètres fonctionnels de l'au moins un port d'entrée (130 ; 310) ou de l'au moins un port de sortie (140a-h ; 320), et transmet en outre la page Web de paramètres fonctionnels au dispositif distant (250) pour affichage par l'intermédiaire d'une interface utilisateur (380).

13. Système de distribution de puissance (100 ; 200) selon la revendication 12, dans lequel la PDU (120 ; 220) est disposée dans une baie de serveur (102).

14. Système de distribution de puissance (100 ; 200) selon la revendication 13, dans lequel la PDU (120 ; 220) est disposée sur un arrière de la baie de serveur (102), dans lequel l'arrière est positionné à proximité d'un mur, d'une autre baie ou autre structure.
